# EUROPÄISCHE PATENTANMELDUNG

(11) **EP 3 246 803 A1**
(43) Veröffentlichungstag der Anmeldung: **22.11.2017**
(21) Anmeldenummer: 17169196.7
(22) Anmeldetag: 03.05.2017
(51) Int. Cl.: G06F 3/0482, G06F 3/0488

(54) **TOUCHPAD MIT GESTENSTEUERUNG FÜR WALLSCREEN**

(30) Priorität: 19.05.2016 DE 102016208575
(71) Anmelder: Heidelberger Druckmaschinen AG, 69115 Heidelberg (DE)
(72) Erfinder: Berg, Winfried, 69126 Heidelberg (DE); Franke, Volkhard, 69198 Schriesheim (DE); König, Edelbert, 76709 Kronau (DE)

(57) **Zusammenfassung**

Die Erfindung betrifft ein Verfahren zur Bedienung und Anzeige von Funktionen auf einer Bedienoberfläche (9) eines Bildschirms (8) einer Maschine (15), wobei ein Sensor (3) zur Erfassung von wenigstens 1-Finger- und 2-Finger-Wischgesten vorgesehen ist und wobei mittels 1-Finger- und 2-Finger-Wischgesten Eingaben eines Bedieners erzeugt und vom Sensor (3) erfasst und in Steuerungssignale der Maschine (15) umgewandelt werden. Die Erfindung zeichnet sich dadurch aus, dass die Bedienung oder Anzeige von Funktionen auf der Bedienoberfläche (9) des Bildschirms (8) in Abhängigkeit einer Unterscheidung wenigstens zwischen 1-Finger- und 2-Finger-Wischgesten durch einen Steuerungsrechner (2) der Maschine (15) erfolgt.

## Beschreibung

Die vorliegende Erfindung betrifft ein Verfahren zur Bedienung und Anzeige von Funktionen auf einer Bedienoberfläche eines Bildschirms einer Maschine, wobei ein Sensor zur Erfassung von wenigstens 1-Finger- und 2-Finger-Wischgesten vorgesehen ist und wobei mittels 1-Finger- und 2-Finger-Wischgesten Eingaben eines Bedieners erzeugt, vom Sensor erfasst und im Steuerungssignal der Maschine umgewandelt werden.

Die Bedienung von Maschinen in der Industrie stellt mit zunehmender Komplexität und Automatisierung eine Herausforderung sowohl für die Bediener dieser Maschinen als auch die Hersteller dar. Mit jeder zusätzlichen Funktion und Anzeige auf einem oder mehreren Bildschirmen einer derartigen Maschine vergrößert sich das Problem und Lösungen zur Vereinfachung der Bedienung werden dringend benötigt. Ein Beispiel für eine derartige komplexe und hochautomatisierte Maschine sind moderne Druckmaschinen, welche aktuell über ein Bedienpult verfügen, welches meist einen großen Bildschirm, auch Wallscreen genannt, aufweiset. Dieser Bildschirm gibt eine Übersicht über die Funktionen und Anzeigen der Maschine, wobei die eigentliche Bedienung über eine Computermaus oder einen zusätzlichen Bildschirm mit Touchscreen-Funktion vorgenommen wird, welche mit dem Wallscreen in Wirkverbindung stehen.

Weiterhin gibt es komplett neue Ansätze und Konzepte zur Bedienung von Druckmaschinen, welche zum Beispiel mit Gestensteuerung arbeiten. Ein derartiges Steuerungskonzept geht aus der Patentanmeldung DE 10 2012 022 882 A1 hervor, welche eine Vorrichtung zum Steuern einer Maschine in der grafischen Industrie mit einem Steuerstand und wenigstens einem Bildschirm zur Darstellung von Maschineninformationen offenbart, wobei der Steuerstand mehrere Sensoren zur Erfassung von Gesten einer Bedienperson aufweist. Auf diese Art und Weise kann eine Bedienperson die Maschine mit Gesten steuern. Die Sensoren sind dabei vorzugsweise als Kameras ausgebildet, welche die Gesten der Bedienperson erfassen. Zusätzlich können auch Bewegungen der Augen der Bedienperson erfasst werden, um die Blickrichtung der Bedienperson bei der Anzeige von Maschineninformationen auf dem Bildschirm zu berücksichtigen. Weiterhin wird in dieser Patentanmeldung vorgeschlagen, dass mittels erfasster Gesten des Bedienpersonals der Inhalt von wenigstens einem Bildschirm auf wenigstens einen weiteren Bildschirm übertragen wird.

Aus dem Stand der Technik zur Bedienung von Druckmaschinen mit Gesten geht allerdings nicht hervor, wie diese Gesten am besten beschaffen sein sollten und welche Funktionen sie bewirken sollten, um eine möglichst einfache Bedienung der Maschine zu gewährleisten.

Es ist daher Aufgabe der vorliegenden Erfindung, ein Verfahren zur Bedienung und Anzeige von Funktionen auf einer Bedienoberfläche eines Bildschirms einer Maschine zu schaffen, welches eine einfache und zuverlässige Bedienung der Maschine mittels Gesten einer Bedienperson ermöglicht.

Diese Aufgabe wird erfindungsgemäß durch Patentanspruch 1 gelöst, vorteilhafte Ausgestaltungen der Erfindung sind den Unteransprüchen, der Beschreibung und den Figuren zu entnehmen.

Das erfindungsgemäße Verfahren eignet sich grundsätzlich zur Bedienung und Steuerung der Anzeige von Funktionen auf einer Bedienoberfläche bei jeder Maschine. Insbesondere eignet es sich dazu, die Bedienung komplexer Maschinen, wie zum Beispiel Druckmaschinen, für Bedienpersonen zu erleichtern. Das erfindungsgemäße Verfahren setzt voraus, dass die Maschine einen Bildschirm aufweist, welcher mit einem Steuerungsrechner verbunden ist, welcher über eine Software eine zur Bedienung und Anzeige von Funktionen der Maschine geeignete Bedienoberfläche steuert. Weiterhin muss die Maschine einen Sensor aufweisen, welcher zur Erfassung sogenannter Wischgesten der Finger des Bedienpersonals geeignet ist. Dabei müssen zumindest 1-Finger- und 2-Finger-Wischgesten erkannt werden. In Abhängigkeit der erkannten 1-Finger- und 2-Finger-Wischgesten werden dann im Steuerungsrechner Steuersignale erzeugt, mit denen Bedien- und Anzeigefunktionen auf der Bedienoberfläche der Maschine und in der Maschine selbst gesteuert werden können. Erfindungsgemäß ist dabei vorgesehen, dass die Bedienung oder Anzeige von Funktionen auf der Bedienoberfläche des Bildschirms in Abhängigkeit einer Unterscheidung wenigstens zwischen 1-Finger- und 2-Finger-Wischgesten durch den Steuerungsrechner der Maschine erfolgt. Dies bedeutet also, dass unterschiedliche Funktionen und Anzeigen auf der Bedienoberfläche der Maschine ausgelöst werden, je nachdem, ob das Bedienpersonal eine 1-Finger- oder eine 2-Finger-Wischgeste ausführt. Durch die Unterscheidung wenigstens zwischen 1-Finger- und 2-Finger-Wischgesten können so wenigstens zwei Funktionen oder Anzeigen zuverlässig voneinander unterschieden werden. Selbstverständlich können neben den 1-Finger- und 2-Finger-Wischgesten auch weitere Mehrfinger-Wischgesten oder andere Wischgesten erkannt werden, welche dann wiederum andere Funktionen oder Anzeigen auf der Bedienoberfläche und in der Maschine selbst auslösen.

In einer bevorzugten Ausgestaltung der vorliegenden Erfindung ist vorgesehen, dass der Sensor zur Verarbeitung der 1-Finger- und 2-Finger-Wischgesten ein Touchpad umfasst und dass die Bedienung oder Anzeige der Funktion auf der Bedienoberfläche des Bildschirms in Abhängigkeit der Unterscheidung wenigstens zwischen 1-Finger- und 2-Finger-Wischgesten über einen Rand des Touchpads hinweg durch den Steuerungsrechner erfolgt. Zur Erkennung der 1-Finger- und 2-Finger-Wischgesten wird hierbei ein Touchpad eingesetzt, so wie es derzeit in den meisten tragbaren Computern zum Einsatz kommt. Dieses Touchpad verfügt über eine mit Sensoren ausgestattete Fläche, über die die Finger der Bedienperson streichen können. Dieses Touchpad kann dabei Bestandteil des Bedienpults der Maschine sein, es kann aber auch Bestandteil eines mobilen Bedienpults sein, oder ein tragbarer Computer oder ein Smartphone mit Touchpad kann direkt über eine drahtlose Anbindung zur Steuerung der Maschine eingesetzt werden. Wichtig ist dabei, dass die Bedienung oder Anzeige der Funktionen in Abhängigkeit der Unterscheidung zwischen wenigstens 1-Finger- und 2-Finger-Wischgesten erfolgt, und zwar dann, wenn diese 1-Finger- und 2-Finger-Wischgesten über einen Rand des Touchpads hinweg erfolgen. Damit wird sichergestellt, dass der Bediener die gewünschten Funktionen zur Anzeige oder Bedienung nur dann auslöst, wenn er bewusst über den Rand des Touchpads hinweg mit einem oder zwei Fingern streicht und nicht, wenn er zum Beispiel eine Mauszeigerfunktion auslöst, bei der seine Finger sich in der Mitte des Touchpads befinden. Damit wird vermieden, dass die Bedienung oder Anzeige der Funktionen unbewusst und ungewollt ausgelöst wird. Gleichzeitig ist diese Art der Bedienung für die Bedienperson sehr komfortabel, da die Bedienperson kein zusätzliches Eingabegerät wie eine Maus oder einen Touchscreen benötigt, um die Bedien- oder Anzeigefunktion auszulösen. Dies ist vor allem wichtig, da die aktuellen Bedienoberflächen heute komplexe Strukturen in Form von Hauptmenüs, Untermenüs, Anzeigen oder Pop-ups aufweisen. Zwischen diesen unterschiedlichen Anzeigeebenen kann nun gemäß der vorliegenden Erfindung zuverlässig und komfortabel mittels 1-Finger- und 2-Finger-Wischgesten hin und her gewechselt werden, wobei diese Umschaltung zwischen den Anzeigeebenen nur dann erfolgt, wenn mit den 1-Finger- und 2-Finger-Wischgesten auch über den Rand des Touchpads hinweg gewischt wird. Innerhalb einer Anzeigeebene kann die Bedienperson mit ihren Fingern im Mittelbereich des Touchpads wie bisher einzelne Funktionen auswählen und durch Wischen oder Tippen auf das Touchpad auslösen. Die vorliegende Erfindung kann somit erstmals die Auswahl von Funktionen innerhalb einer Bedienebene zuverlässig von der Auswahl zwischen verschiedenen Bedienebenen trennen, wobei die Auswahl durch Wischgesten über den Rand des Touchpads erfolgt.

Vorteilhafterweise ist weiterhin vorgesehen, dass der Steuerungsrechner bei Wischgesten über den rechten Rand des Touchpads hinweg andere Funktionen oder Anzeigen auf der Bedienoberfläche des Bildschirms bewirkt als bei Wischgesten über den linken Rand des Touchpads hinweg. Durch die Unterscheidung zwischen rechtem und linkem Rand können Funktionen oder Anzeigen auf der Bedienoberfläche weiter unterteilt werden. Je nachdem, ob der Bediener über den rechten oder linken Rand hinweg wischt, können andere Funktionen oder Anzeigen auf der Bedienoberfläche ausgeführt werden. Eine Möglichkeit ist auch, sämtliche Funktionen, zum Beispiel über den rechten Rand des Touchpads, anzusprechen, während sämtliche Anzeigen über den linken Rand des Touchpads angesprochen werden. Selbstverständlich können rechter und linker Rand auch vertauscht werden.

In einer weiteren Ausgestaltung der Erfindung ist vorgesehen, dass der Steuerungsrechner bei Wischgesten über den oberen Rand des Touchpads hinweg andere Funktionen oder Anzeigen auf der Bedienoberfläche des Bildschirms bewirkt als bei Wischgesten über den unteren Rand des Touchpads hinweg. Auch auf diese Art und Weise kann zwischen Anzeigen und Funktionen unterschieden werden, indem diese entweder dem oberen oder dem unteren Rand zugeordnet werden. Zusätzlich lässt sich dieses Verfahren selbstverständlich mit dem Erkennen und Unterscheiden von Wischgesten über den linken und rechten Rand hinweg kombinieren, so dass eine vierfache Unterscheidung möglich ist. Allein durch das Zuordnen von Funktionen und Anzeigen zu den vier Rändern des Touchpads lassen sich somit die Anzeigen und Funktionen für den Bediener besonders einprägsam strukturieren.

Vorteilhafterweise ist außerdem vorgesehen, dass der Steuerungsrechner in Abhängigkeit des Wischens über den rechten oder linken Rand des Touchpads im Gegensatz zum Wischen über den unteren oder oberen Rand des Touchpads unterschiedliche Funktionen oder Anzeigen auf der Bedienoberfläche des Bildschirms bewirkt. In diesem Fall ist es unerheblich, ob der Bediener über den rechten oder linken Rand des Touchpads wischt, es ist auch unerheblich, ob er über den unteren oder oberen Rand des Touchpads wischt. Beim Wischen über den rechten oder linken Rand des Touchpads werden jeweils die gleichen ersten Funktionen oder Anzeigen ausgelöst und beim Wischen über den oberen oder unteren Rand des Touchpads werden jeweils die gleichen zweiten Funktionen oder Anzeigen auf der Bedienoberfläche des Bildschirms ausgelöst. In diesem Fall wird also nur unterschieden, ob der Bediener horizontal oder vertikal über den Rand wischt.

In einer weiteren Ausgestaltung der Erfindung ist vorgesehen, dass der Steuerungsrechner in Abhängigkeit des Wischens von innen nach außen im Gegensatz zum Wischen von außen nach innen auf dem Touchpad unterschiedliche Funktionen oder Anzeigen auf der Bedienoberfläche des Bildschirms bewirkt. Mit der Unterscheidung zwischen Wischen von innen und Wischen nach außen auf dem Touchpad gibt es eine weitere Unterscheidungsmöglichkeit. In Verbindung mit dem Wischen über den unteren oder oberen Rand sowie den linken oder rechten Rand des Touchpads kann somit eine weitere Unterscheidungsmöglichkeit dem Bediener an die Hand gegeben werden, welche dieser intuitiv nutzen kann. Auf diese Art und Weise können noch mehr Funktionen oder Anzeigen auf der Bedienoberfläche durch unterschiedliche Wischgesten auf dem Touchpad zuverlässig erkannt, unterschieden und für den Bediener intuitiv zugänglich gemacht werden.

In einer weiteren Ausgestaltung der Erfindung ist vorgesehen, dass der Steuerungsrechner eine Umschaltung zwischen Hauptmenüebenen auf der Bedienoberfläche beim Erkennen einer 2-Finger-Wischgeste über den linken oder rechten Rand des Touchpads hinweg ausführt. Bei dieser Ausgestaltung der Erfindung erfolgt die Umschaltung zwischen Hauptmenüebenen auf der Bedienoberfläche durch das Wischen mit zwei Fingern über den linken oder rechten Rand des Touchpads hinweg. Auf diese Art und Weise kann der Bediener intuitiv zwischen Hauptmenüebenen, zum Beispiel eines Anwendungsprogramms, wechseln, indem er mit zwei Fingern rechts oder links über den Rand des Touchpads wischt.

Weiterhin kann vorgesehen sein kann, dass der Steuerungsrechner eine Umschaltung von Bildschirmmenüs unterhalb der Hauptmenüebene ausführt, wenn eine 1-Finger-Wischgeste über den linken oder rechten Rand des Touchpads hinweg erkannt wird. Im Gegensatz zu der Umschaltung zwischen Hauptmenüebenen erfolgt die Umschaltung von Bedienmenüs unterhalb der Hauptebene durch 1-Finger-Wischgesten, mit denen der Bediener ebenfalls über den linken oder rechten Rand des Touchpads wischt. Dies geschieht sehr intuitiv, da der Bediener leicht lernt, dass die Umschaltung zwischen Hauptmenüs über eine 2-Finger-Wischgeste und die Umschaltung von Bedienmenüs unterhalb der Hauptmenüebene über eine 1-Finger-Wischgeste erfolgt.

In einer weiteren Ausgestaltung der vorliegenden Erfindung ist vorgesehen, dass der Steuerungsrechner ein Verkleinern oder Vergrößern bzw. Umschalten von Anzeigeflächen auf der Bedienoberfläche ausführt, wenn eine 2-Finger-Wischgeste über den oberen oder unteren Rand des Touchpads hinweg erkannt wird. Auf diese Art und Weise lassen sich weitere Funktionen innerhalb einer Menüebene zuverlässig von den Funktionen zur Umschaltung zwischen Hauptmenüs oder Untermenüs abgrenzen, indem Funktionen und Anzeigen innerhalb eines Menüs durch 2-Finger-Wischgesten über den oberen oder unteren Rand bewirkt werden, während das Umschalten zwischen Hauptmenüs oder Untermenüs über den linken oder rechten Rand erfolgt.

In einer besonders vorteilhaften Ausgestaltung der vorliegenden Erfindung ist vorgesehen, dass die Maschine eine Druckmaschine ist, dass die Bildschirmoberfläche Druckwerksanzeigen aufweist und dass der Steuerungsrechner ein Umschalten der Druckwerksanzeigen bewirkt, wenn eine 1-Finger-Wischgeste über den oberen oder unteren Rand des Touchpads hinweg erkannt wird. Die Bildschirmoberflächen zur Bedienung von Druckmaschinen sind sehr komplex, da Druckmaschinen viele Funktionen und Anzeigen aufweisen, die auf der Bildschirmoberfläche dargestellt werden. Während bei den zuvor genannten Funktionen und Anzeigen die Umschaltung zwischen Hauptmenüs und die Umschaltung zwischen Untermenüs oder Auslösen von Funktionen und Anzeigen innerhalb eines Menüs 2-Finger-Wischgesten über den Rand des Touchpads hinweg zum Einsatz kommen, wird zur Umschaltung von Druckwerksanzeigen eine 1-Finger-Wischgeste genutzt, welche über den oberen oder unteren Rand des Touchpads hinweg erfolgt. So kann sich der Bediener leicht merken, dass er mit einer 1-Finger-Wischgeste über den oberen oder unteren Rand des Touchpads hinweg Druckwerksanzeigen auf der Bildschirmoberfläche umschaltet. Auf diese Art und Weise lässt sich ein intuitiv bedienbares und sauber strukturiertes Bedienmenü für die Bildschirmoberfläche verwirklichen, welche das Bedienpersonal einfach mit 2-Finger- und 1-Finger-Wischgesten über die Ränder des Touchpads hinweg steuern kann.

Die vorliegende Erfindung wird nachfolgend anhand zweiter Figuren näher beschrieben und erläutert. Es zeigen:
- Figur 1:: die Draufsicht auf ein Touchpad eines Bedienpults für eine Druckmaschine und
- Figur 2:: die Ansicht einer Bedienoberfläche, welche über die erfindungsgemäße Gestensteuerung bedient wird.

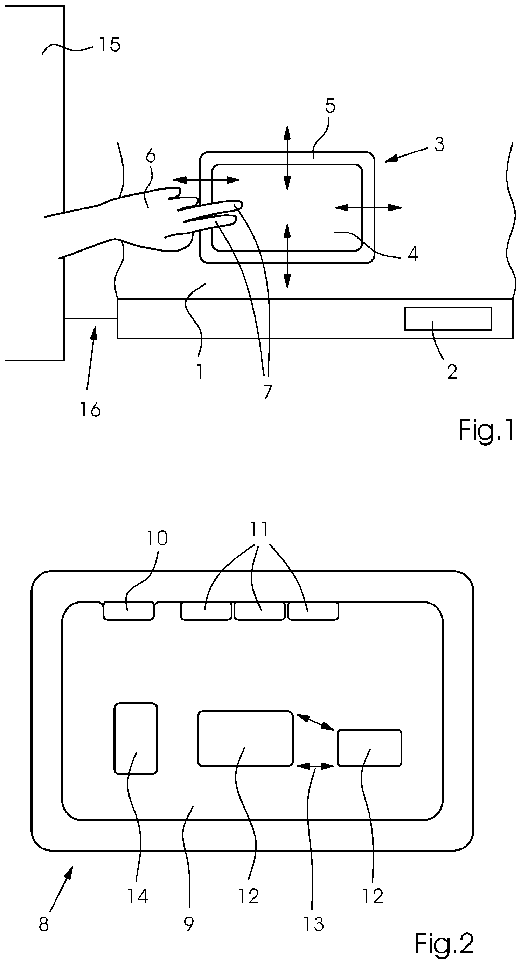

In Figur 1 ist schematisch das Bedienpult 1 einer Druckmaschine 15 abgebildet. Das Bedienpult 1 enthält einen Steuerungsrechner 2, welcher über eine Netzwerkverbindung 16 mit der Druckmaschine 15 und einem Bildschirm 8 verbunden ist. Dabei kann die Druckmaschine 15 zusätzliche Steuerungsrechner aufweisen, welche über den Steuerungsrechner 2 des Bedienpults 1 kontrolliert werden. Bei dem Steuerungsrechner 2 handelt es sich um einen Industrie-PC. Dabei kommen übliche Computer-Betriebssysteme wie Windows oder Linux zum Einsatz. Das Bedienpult 1 weist an seiner Oberseite ein Touchpad 3 auf, wie es von tragbaren Computern wie Notebooks oder Laptops bekannt ist. Dieses Touchpad 3 verfügt über eine von Sensoren erfasste Oberfläche, welche zur Erfassung von Berührungen und Gesten von Bedienpersonen ausgelegt ist. Dabei weist das Touchpad 3 eine Innenfläche 4 und eine Randfläche 5 auf. Die Randfläche 5 ist von der Innenfläche 4 räumlich abgegrenzt, so dass Berührungen und Gesten durch das Bedienpersonal innerhalb der Innenfläche 4 andere Funktionen und Anzeigen auslösen als die Berührungen und Gesten im Bereich der Randfläche 5. Dabei umgibt die Randfläche 5 die Innenfläche 4 vollständig und ist die Randfläche 5 im Vergleich zur Innenfläche 4 relativ schmal dimensioniert. Auf diese Art und Weise wird vermieden, dass die Funktionsfläche der Innenfläche 4 wesentlich eingeschränkt wird. In Figur 1 ist zu erkennen, wie die Hand 6 eines Bedieners über den linken Rand des Touchpads 3 streicht. In Figur 1 führt der Bediener dabei eine sogenannte 2-Finger-Wischgeste aus, indem er mit zwei Fingern 7 über den linken Rand des Touchpads 3 wischt. Auf diese Art und Weise kann der Bediener zuverlässig zwischen Hauptmenüebenen einer Bedienoberfläche 9 umschalten.

Die Bedienoberfläche 9 mit ihrem Bildschirmmenü ist in Figur 2 abgebildet. Dabei ist grob die Struktur einer derartigen Bedienoberfläche 9 zu erkennen, welche auf einem großen Bildschirm 8 angezeigt wird. Die Bedienoberfläche 9 verfügt über ein Hauptmenü 10 und mehrere Reiter 11. Jeder dieser Reiter 11 bewirkt die Umschaltung zwischen Untermenüs. In jedem Untermenü sind eine oder mehrere Anzeigeflächen 12 vorhanden, welche der Bediener über bestimmte Wischgesten über das Touchpad 3 mittels einer Zoomfunktion 13 verkleinern oder vergrößern kann. Weiterhin ist schematisch eine Druckwerksanzeige 14 abgebildet, welche der Bediener ebenfalls durch bestimmte Wischgesten auf dem Touchpad 3 umschalten kann.

Dabei ist vorgesehen, dass der Bediener beim Streichen mit zwei Fingern 7 über den rechten oder linken Rand des Touchpads 3 in Figur 1 zwischen den Hauptmenüebenen 10 in Figur 2 umschalten kann. Zwischen den Reitern 11 unterhalb der Hauptmenüebene kann der Bediener umschalten, indem er mit einem Finger 7 über den linken oder rechten Rand des Touchpads 3 hinweg streicht. Weiterhin kann der Bediener durch Streichen mit zwei Fingern 7 über den oberen oder unteren Rand des Touchpads 3 hinweg die Anzeigeflächen 12 verkleinern oder vergrößern oder zwischen unterschiedlichen Anzeigeflächen 12 umschalten. Zusätzlich kann der Bediener mit einem Finger 7 über den oberen oder unteren Rand des Touchpads 3 hinweg streichen, wenn er ein Umschalten der Druckwerksanzeigen 14 bewerkstelligen will. Bei der vorliegenden Ausführungsform wird somit zwischen 1-Finger- und 2-Finger-Wischgesten unterschieden, und ob der Bediener über den oberen bzw. unteren Rand streicht oder ob der Bediener über den linken bzw. rechten Rand streicht. Somit wird also zwischen vertikalen und horizontalen Wischgesten und zwischen 1-Finger- und 2-Finger-Wischgesten unterschieden. Auf diese Art und Weise kann eine intuitive und einfache Bedienung der vielen Anzeigen und Funktionen einer Druckmaschine 15 erreicht werden. Dies vereinfacht die Bedienung komplexer Bedienoberflächen 9 von Druckmaschinen 15 erheblich.

### Bezugszeichenliste

- 1: Bedienpult
- 2: Steuerungsrechner
- 3: Touchpad
- 4: Innenfläche
- 5: Randfläche
- 6: Hand des Bedieners
- 7: Finger
- 8: Großer Bildschirm
- 9: Bedienoberfläche
- 10: Hauptmenü
- 11: Reiter
- 12: Anzeigefläche
- 13: Zoomfunktion
- 14: Druckwerksanzeige
- 15: Druckmaschine
- 16: Netzwerkverbindung

## Patentansprüche

1. Verfahren zur Bedienung und Anzeige von Funktionen auf einer Bedienoberfläche (9) eines Bildschirms (8) einer Maschine (15), wobei ein Sensor (3) zur Erfassung von wenigstens 1- Finger- und 2-Finger-Wischgesten vorgesehen ist und wobei mittels 1-Finger- und 2-Finger-Wischgesten Eingaben eines Bedieners erzeugt und vom Sensor (3) erfasst und in Steuerungssignale der Maschine (15) umgewandelt werden,
**dadurch gekennzeichnet,**
**dass** die Bedienung oder Anzeige von Funktionen auf der Bedienoberfläche (9) des Bildschirms (8) in Abhängigkeit einer Unterscheidung wenigstens zwischen 1-Finger- und 2-Finger-Wischgesten durch einen Steuerungsrechner (2) der Maschine (15) erfolgt.

2. Verfahren nach Anspruch 1,
**dadurch gekennzeichnet,**
**dass** der Sensor zur Verarbeitung der 1-Finger- und 2-Finger-Wischgesten ein Touchpad (3) ist und dass die Bedienung oder Anzeige der Funktionen auf der Bedienoberfläche (9) des Bildschirms (8) in Abhängigkeit der Unterscheidung wenigstens zwischen 1-Finger- und 2-Finger-Wischgesten über einen Rand des Touchpads (3) hinweg durch den Steuerungsrechner (2) erfolgt.

3. Verfahren nach Anspruch 2,
**dadurch gekennzeichnet,**
**dass** der Steuerungsrechner (2) bei Wischgesten über den rechten Rand des Touchpads (3) hinweg andere Funktionen oder Anzeigen auf der Bedienoberfläche (9) des Bildschirms (8) bewirkt als bei Wischgesten über den linken Rand des Touchpads (3) hinweg.

4. Verfahren nach Anspruch 2 oder 3,
**dadurch gekennzeichnet,**
**dass** der Steuerungsrechner (2) bei Wischgesten über den oberen Rand des Touchpads (3) hinweg andere Funktionen oder Anzeigen auf der Bedienoberfläche (9) des Bildschirms (8) bewirkt als bei Wischgesten über den unteren Rand des Touchpads (3) hinweg.

5. Verfahren nach Anspruch 3 und 4,
**dadurch gekennzeichnet,**
**dass** der Steuerungsrechner (2) in Abhängigkeit des Wischens über den rechten oder linken Rand des Touchpads (3) im Gegensatz zum Wischen über den unteren oder oberen Rand des Touchpads (3) unterschiedliche Funktionen oder Anzeigen auf der Bedienoberfläche (9) des Bildschirms (8) bewirkt.

6. Verfahren nach einem der vorhergehenden Ansprüche 2 bis 5,
**dadurch gekennzeichnet,**
**dass** der Steuerungsrechner (2) in Abhängigkeit des Wischens von innen nach außen im Gegensatz zum Wischen von außen nach innen auf dem Touchpad (3) unterschiedliche Funktionen oder Anzeigen auf der Bedienoberfläche (9) des Bildschirms (8) bewirkt.

7. Verfahren nach einem der vorhergehenden Ansprüche 2 bis 6,
**dadurch gekennzeichnet,**
**dass** der Steuerungsrechner (2) eine Umschaltung zwischen Hauptmenüebenen auf der Bedienoberfläche (9) beim Erkennen einer 2-Finger-Wischgeste über den linken oder rechten Rand des Touchpads (3) hinweg ausführt.

8. Verfahren nach einem der vorhergehenden Ansprüche 2 bis 7,
**dadurch gekennzeichnet,**
**dass** der Steuerungsrechner (2) eine Umschaltung von Bedienmenüs unterhalb der Hauptmenüebene ausführt, wenn eine 1-Finger-Wischgeste über den linken oder rechten Rand des Touchpads (3) hinweg erkannt wird.

9. Verfahren nach einem der vorhergehenden Ansprüche 2 bis 8,
**dadurch gekennzeichnet,**
**dass** der Steuerungsrechner (2) ein Verkleinern oder Vergrößern bzw. Umschalten von Anzeigeflächen auf der Bedienoberfläche (9) ausführt, wenn eine 2-Finger-Wischgeste über den oberen oder unteren Rand des Touchpads (3) hinweg erkannt wird.

10. Verfahren nach einem der Ansprüche 2 bis 9,
**dadurch gekennzeichnet,**
**dass** die Maschine eine Druckmaschine (15) ist, dass die Bildschirmoberfläche (9) Druckwerksanzeigen aufweist und dass der Steuerungsrechner (2) ein Umschalten der Druckwerksanzeigen bewirkt, wenn eine 1-Finger-Wischgeste über den oberen oder unteren Rand des Touchpads (3) hinweg erkannt wird.
